# EUROPÄISCHE PATENTANMELDUNG

(11) **EP 0 570 713 A1**
(43) Veröffentlichungstag der Anmeldung: **24.11.1993**
(21) Anmeldenummer: 93106519.7
(22) Anmeldetag: 22.04.1993
(51) Int. Cl.: H02K 7/18

(54) **Hydraulischer Generatorantrieb**

(30) Priorität: 21.05.1992 DE 9206881 U
(71) Anmelder: ROBERT BOSCH GMBH, 70442 Stuttgart (DE)
(72) Erfinder: Loedige, Heinrich, Dipl.-Ing., W-7143 Vaihingen/Enz (DE)

(57) **Zusammenfassung**

Der hydraulische Generatorantrieb benutzt einen Zahnradmotor (16), dessen Läufer fliegend auf der Generatorwelle (14) angeordnet ist. Der Zahnradmotor bildet ein integrales Bauteil des Generators (10) und ist in einer Ausnehmung (15) eines Generator-Gehäuseteils (12) angeordnet. Auf diese Weise ergibt sich eine sehr kompakte Einheit aus Generator und hydraulischem Antriebsmotor.

## Beschreibung

### Stand der Technik

Die Erfindung geht aus von einem Generatorantrieb nach der Gattung des Hauptanspruchs. Es ist bekannt, den Generator eines Kraftfahrzeugs mit einem Hydraulikmotor anzutreiben. Dadurch wird insbesondere die Ladebilanz des Akkumulators im Kraftfahrzeug verbessert. Durch einen solchen Antrieb wird die Generatordrehzahl von der Drehzahl des Verbrennungsmotors entkoppelt und kann auch bei niedrigen Drehzahlen desselben und hoher Belastung des elektrischen Bordnetzes einen entsprechenden Strom liefern. Bekannte derartige Aggregate bauen jedoch sehr voluminös, da hydraulischer Motor und Generator räumlich getrennt sind.

### Vorteile der Erfindung

Der erfindungsgemäße hydraulische Generatorantrieb mit den kennzeichnenden Merkmalen des Hauptanspruchs hat demgegenüber den Vorteil, daß Baugröße und Gewicht desselben wesentlich verringert sind. Dadurch erleichtert sich auch der Einbau im Kraftfahrzeug ganz wesentlich.

Weitere Vorteile der Erfindung ergeben sich aus den Unteransprüchen.

Ein Ausführungsbeispiel der Erfindung ist in der nachfolgenden Beschreibung und Zeichnung wiedergegeben. Letztere zeigt einen Längsschnitt durch einen Generator mit Hydraulikantrieb.

### Beschreibung des Erfindungsbeispiels

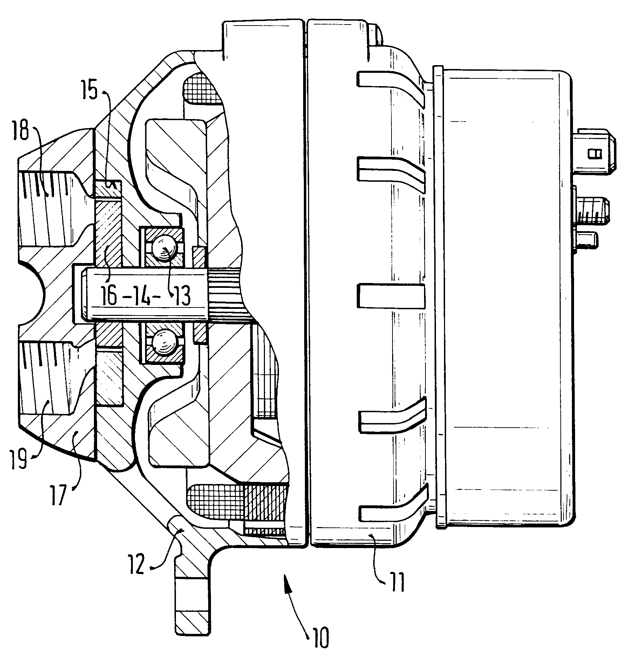

In der Zeichnung ist mit 10 der Generator eines Kraftfahrzeugs bezeichnet, auf welchen jedoch nicht weiter eingegangen ist, da nicht erfindungswesentlich und im übrigen bekannt. Das Gehäuse des Generators ist zweiteilig ausgebildet und hat ein Gehäuseteil 11 für den vorwiegend elektrischen Teil und ein Gehäuseteil 12, das mit dem Gehäuseteil 11 verschraubt ist. Im Gehäuseteil 12 befindet sich eine Lagerstelle 13 für die Generatorwelle 14. Im stirnseitigen Ende des Gehäuseteils 12 ist in einer zylindrischen Ausnehmung 15 ein Hydraulikmotor 16 angeordnet, welcher die Generatorwelle 14 antreibt; er sitzt fliegend auf dem Ende der Generatorwelle. Die Ausnehmung 15 ist durch einen Gehäusedeckel 17 abgedeckt, in welchem sich der Zufluß 18 und der Abfluß 19 für das hydraulische Druckmedium befinden, das von einer im Motor angeordneten Pumpe geliefert wird.

Als besonders zweckmäßig für einen hydraulischen Motor hat sich ein sog. G-Rotor erwiesen, also ein Zahnradmotor bekannter Bauart, oder auch ein Innenzahnrad- bzw. Außenzahnradmotor. Diese Geräte sind besonders raumsparend. Natürlich wäre auch jede andere Art von hydraulischem Motor verwendbar. Auf diese Weis erhält man eine sehr kompakte Kombination von Generator und integriertem hydraulischen Antrieb desselben.

## Patentansprüche

1. Hydraulischer Generatorantrieb, dadurch gekennzeichnet, daß der den Generator antreibende Hydraulikmotor in einem Gehäuseteil (12) des Generators (10) angeordnet ist.

2. Antrieb nach Anspruch 1, dadurch gekennzeichnet, daß der Hydraulikmotor ein Zahnradmotor ist, zum Beispiel vom Typ G-Rotor.

3. Antrieb nach Anspruch 1 und/oder 2, dadurch gekennzeichnet, daß das Antriebsrad des Hydraulikmotors fliegend am Ende der Generatorwelle (14) angeordnet ist.
